# FASCICULE DE BREVET EUROPEEN

(11) **EP 0 868 617 B1**
(45) Date de publication et mention de la délivrance du brevet: **27.07.2005**
(21) Numéro de dépôt: 97911319.8
(22) Date de dépôt: 23.10.1997
(51) Int. Cl.: F16H 7/18, F16H 57/00, F16H 55/48, F16H 7/02

(54) **DISPOSITIF MECANIQUE DE TRANSMISSION DE PUISSANCE ET MOTEUR COMPORTANT UN TEL DISPOSITIF**
MECHANISCHE LEISTUNGSÜBERTRAGUNGSVORRICHTUNG UND BRENNKRAFTMASCHINE MIT EINER SOLCHEN VORRICHTUNG
MECHANICAL DEVICE FOR POWER TRANSMISSION AND ENGINE COMPRISING SAME

(30) Priorité: 25.10.1996 FR 9613048
(43) Date de publication de la demande: 07.10.1998
(73) Titulaire: HUTCHINSON, 75008 Paris (FR)
(72) Inventeur: ROINTRU, Claude, F-37300 Joue-les-Tours (FR); TRICOCHE, Denis, F-37260 Monts (FR); VARIN, Hervé, F-37510 Ballan (FR)
(74) Mandataire: Schwartz, Thierry J.
(86) Numéro de dépôt international: PCT/FR1997/001896
(87) Numéro de publication internationale: WO 1998/019079

(56) Documents cités:
- EP-A- 0 628 750
- DE-A- 4 243 331
- GB-A- 2 276 929

## Description

La présente invention se rapporte à un dispositif mécanique à courroie de transmission de puissance et à un moteur comportant un tel dispositif.

Les dispositifs de transmission de puissance par courroie comportent habituellement une poulie entraînée par un axe moteur, au moins une poulie solidarisée avec un arbre mené entraînée par la courroie, un galet de renvoi et un tendeur de courroie. Malheureusement, la courroie en défilement sous tension mécanique vibre et transmet des vibrations acoustiques à l'air, générant un bruit qui peut se révéler gênant, notamment pour les passagers d'un véhicule automobile dans le cas de courroies de transmission ou de distribution d'un moteur thermique d'un tel véhicule.

Il est connu du brevet EP 0 628 750, correspondant au préambule de la revendication 1, un tendeur de courroie constitué par un galet comportant une jante déformable, suffisamment épaisse, dont la fonction principale est d'appliquer une force élastique à la courroie. Une telle épaisseur déformable ne permet pas d'absorber efficacement les vibrations.

C'est par conséquent un but de la présente invention d'offrir un dispositif mécanique de transmission de puissance présentant un faible niveau sonore.

C'est également un but de la présente invention d'offrir un dispositif mécanique de transmission de puissance présentant un faible niveau de vibrations.

Ces buts sont atteints par un dispositif mécanique de transmission de puissance comportant au moins un galet muni d'une couche périphérique d'appui sur la courroie en un matériau absorbant les vibrations, notamment en caoutchouc. Il peut s'agir d'un galet supplémentaire rajouté à un dispositif mécanique de transmission de puissance par courroie, d'un galet de renvoi, d'un galet d'application de force d'un tendeur et/ou d'une poulie.

L'invention est définie selon les termes de la revendication 1.

L'invention a également pour objet un dispositif, caractérisé en ce qu'il comporte une poulie entraînant la courroie et solidarisée en rotation avec un arbre moteur, notamment l'axe d'un vilebrequin d'un moteur thermique de véhicules automobiles, au moins une poulie menée et un galet de renvoi.

L'invention a également pour objet un dispositif, caractérisé en ce qu'il comporte un tendeur de courroie.

L'invention a également pour objet un dispositif, caractérisé en ce que le galet de renvoi est muni d'une bande de roulement ou d'un revêtement radialement externe en matériau absorbant les vibrations.

L'invention a également pour objet un dispositif, caractérisé en ce que le matériau absorbant les vibrations de la bande de roulement ou du revêtement radialement externe est un élastomère.

L'invention a également pour objet un dispositif, caractérisé en ce que le matériau absorbant les vibrations de la bande de roulement ou du revêtement radialement externe est réalisé en HNBR.

L'invention a également pour objet un dispositif, caractérisé en ce que la bande de roulement sur la courroie ou le revêtement radialement externe en matériau absorbant les vibrations a une épaisseur comprise entre 3 et 5 mm.

L'invention a également pour objet un dispositif, caractérisé en ce qu'il comporte une chaîne cinématique de distribution entraînant des poulies liées en rotation aux arbres à cames d'un moteur thermique de véhicules automobiles.

L'invention a également pour objet un dispositif, caractérisé en ce que ledit dispositif comporte une chaîne cinématique de transmission d'accessoire d'un moteur thermique de véhicules automobiles comportant une poulie liée en rotation avec l'axe d'un alternateur.

L'invention a également pour objet un dispositif, caractérisé en ce que la pièce tournante autour d'un axe fixe, comportant une bande de roulement sur la courroie ou un revêtement radialement externe en matériau absorbant les vibrations, comporte des flasques latérales de guidage de la courroie.

L'invention a également pour objet un moteur thermique pour véhicule automobile, caractérisé en ce qu'il comporte un dispositif mécanique de transmission de puissance selon l'invention.

La présente invention sera mieux comprise au moyen de la description ci-après et des figures annexées données comme des exemples non limitatifs et sur lesquels :
- la figure 1 est une vue de côté d'un premier exemple de réalisation d'un galet susceptible d'être mis en oeuvre dans un dispositif selon la présente invention ;
- la figure 2 est une vue de côté d'un deuxième exemple de réalisation d'un galet susceptible d'être mis en oeuvre dans un dispositif selon la présente invention ;
- la figure 3 est une vue en coupe d'une roue dentée susceptible d'être mise en oeuvre dans un dispositif selon la présente invention ;
- la figure 4 est une vue en perspective d'un galet lisse susceptible d'être mis en oeuvre dans le dispositif selon la présente invention ;
- la figure 5 est une vue en perspective d'un galet comportant des stries diagonales susceptibles d'être mises en oeuvre dans un dispositif selon la présente invention ;
- la figure 6 est une vue en perspective d'un galet comportant des stries axiales susceptibles d'être mises en oeuvre dans un dispositif selon la présente invention ;
- la figure 7 est une vue en coupe d'une première variante de réalisation d'un galet selon l'invention comportant des flasques latérales ;
- la figure 8 est une vue en coupe d'une deuxième variante de réalisation d'un galet selon l'invention comportant des flasques latérales ;
- la figure 9 est une vue schématique d'un circuit de distribution pour véhicule automobile selon la présente invention ;
- la figure 10 est un schéma d'un dispositif de transmission pour véhicule automobile selon la présente invention.

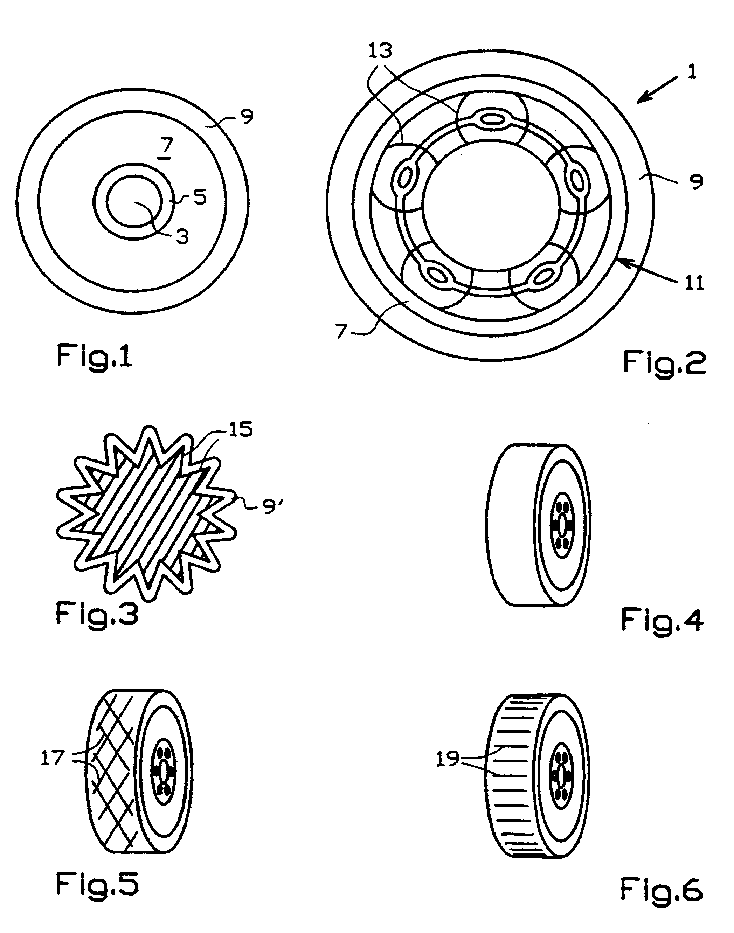

Sur les figures 1 à 10, on a utilisé les mêmes références pour désigner les mêmes éléments.

Sur la figure 1, on peut voir un premier exemple de réalisation d'un galet 1 selon la présente invention comportant sur un axe 3 un palier lisse 5, par exemple métallique, en PTFE ou, avantageusement, en céramique, une jante 7 et un bandage 9 de roulement sur une courroie réalisé en matériau absorbant les vibrations, avantageusement en élastomère. On entend par matériau absorbant les vibrations, matériau qui possède une tangente δ (valeurs obtenues pour des sollicitations à 2 % en compression, à 100°C, à 25 Hz et avec une précontrainte de 5 %), par exemple comprise entre 0,05 et 0,65, de préférence entre 0,07 et 0,50, et par exemple égale à 0,095.

Sur la figure 2, on peut voir l'exemple préféré de réalisation d'un galet 1 selon la présente invention comportant un roulement 11, par exemple à bille 13, à rouleaux ou autre, disposé entre un axe 3 et une jante 7 recouverte sur sa surface radialement' externe avec un bandage 9 en matériau absorbant les vibrations.

Sur la figure 3, on peut voir une couronne, roue ou poulie dentée pour dispositif de transmission de puissance à courroie synchrone, comportant des dents 15 régulièrement réparties sur le pourtour recouvert par un revêtement 9' en matériau absorbant les vibrations, notamment en élastomère. Avantageusement, chaque dent 15 a une extension radiale suffisante pour assurer la rigidité et empêcher la flexion de la denture soumise aux contraintes par une courroie synchrone, le revêtement 9' assurant l'absorption des vibrations et évitant ainsi que la courroie engendre un bruit indésirable.

Le matériau des bandes de roulement 9 ou du revêtement 9' est avantageusement choisi parmi les caoutchoucs de type chloroprène, EPDM, les caoutchoucs nitrile-butadiène (HNBR), EPR, ACSM, IIR, des matériaux thermoplastiques ou thermodurcissables ou leurs mélanges. Avantageusement, le matériau mis en oeuvre présente une bonne résistance aux températures. La face externe de la bande de roulement 9 ou du revêtement 9' peut être recouverte avec un tissu, un non-tissé ou autre. Le matériau des bandes de roulement 9 ou de revêtement 9' a par exemple une dureté comprise entre 30 et 95 Shore A, de préférence entre 40 et 70 Shore A, par exemple égale à 55 Shore A.

L'épaisseur de la bande de roulement 9 ou du revêtement 9' est par exemple comprise entre 0,5 mm et 10mm, de préférence comprise entre 1 mm et 7 mm, de manière préférentielle comprise entre 3 mm et 5 mm, par exemple égale à 2 mm, 3 mm, 4 mm, 5 mm, 6 mm ou 7 mm.

La surface externe de la bande de roulement 9 en contact avec la courroie peut être lisse, comme illustré sur la figure 4, ou comporter des stries. Dans l'exemple illustré sur la figure 5, la surface de la bande de roulement 9 comporte des stries diagonales croisées 17 alors qu'elle est munie de stries axiales 19 dans l'exemple illustré sur la figure 6. Il est bien entendu que la mise en oeuvre d'autres stries ou traitement de surface de la bande de roulement 9 du galet 1, ne sort pas du cadre de la présente invention.

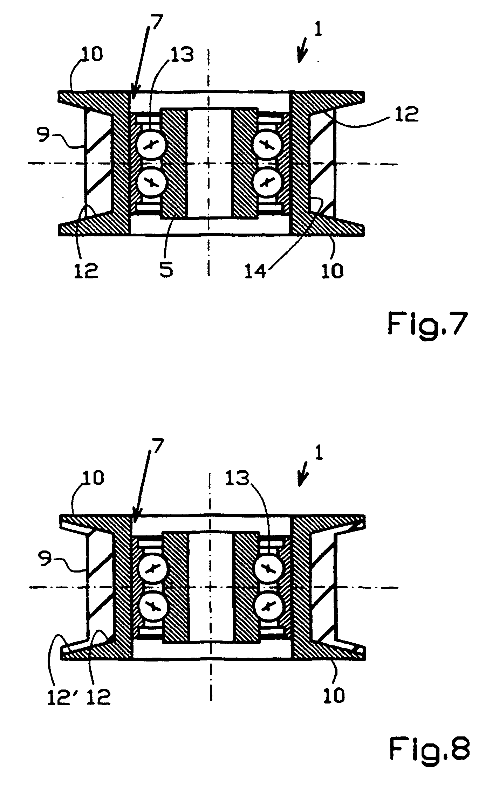

Comme on peut le voir sur les figures 7 et 8, le galet 1 peut, sans sortir du cadre de la présente invention, comporter des flasques latérales 10. Dans l'exemple non limitatif de la figure 7, les flasques 10 sont métalliques, le bandage 9 en matériau absorbant les vibrations étant logé au fond d'une gorge de section trapézoïdale définie par les parois internes 12 des flasques 10 et un fond cylindrique 14 coaxial au logement de l'axe 3. Dans la variante illustrée sur la figure 8, la bande de roulement 9 s'étend également sur les faces internes 12' des flasques 10.

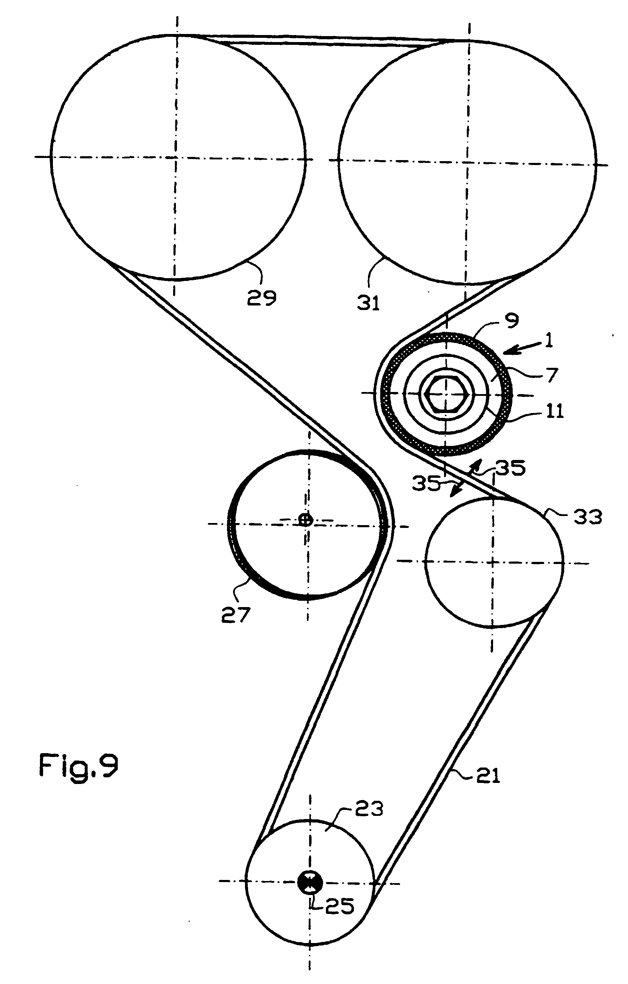

Sur la figure 9, on peut voir un dispositif mécanique à courroie 21 appelé chaîne cinématique de distribution dans l'industrie automobile. La courroie 21 assure l'entraînement d'un galet 27, d'un tendeur et des poulies menées 29 et 31 assurant la rotation des arbres à cames du moteur, d'un galet 1 selon la présente invention et d'une poulie 33 solidarisée en rotation avec l'axe de la pompe à eau du moteur. Les tendeurs 27 peuvent être, comme représenté sur la figure 9, du type rotatif, par exemple comportant un élément élastique de rappel de type ressort exerçant un couple sur le galet du tendeur, du type à matériau déformable décrit dans la Demande de Brevet N° 93 06898 du type tendeur linéaire ou autre. Le galet de renvoi 1 selon la présente invention permet de limiter les vibrations selon les flèches 35 de la courroie 21 et par suite diminue le bruit engendré par le moteur. Il est bien entendu qu'un dispositif mécanique à courroie de transmission comportant des poulies ou galets 23, 27, 29, 31 et/ou 33 munies d'un revêtement 9 ou 9', ne sort pas du cadre de la présente invention.

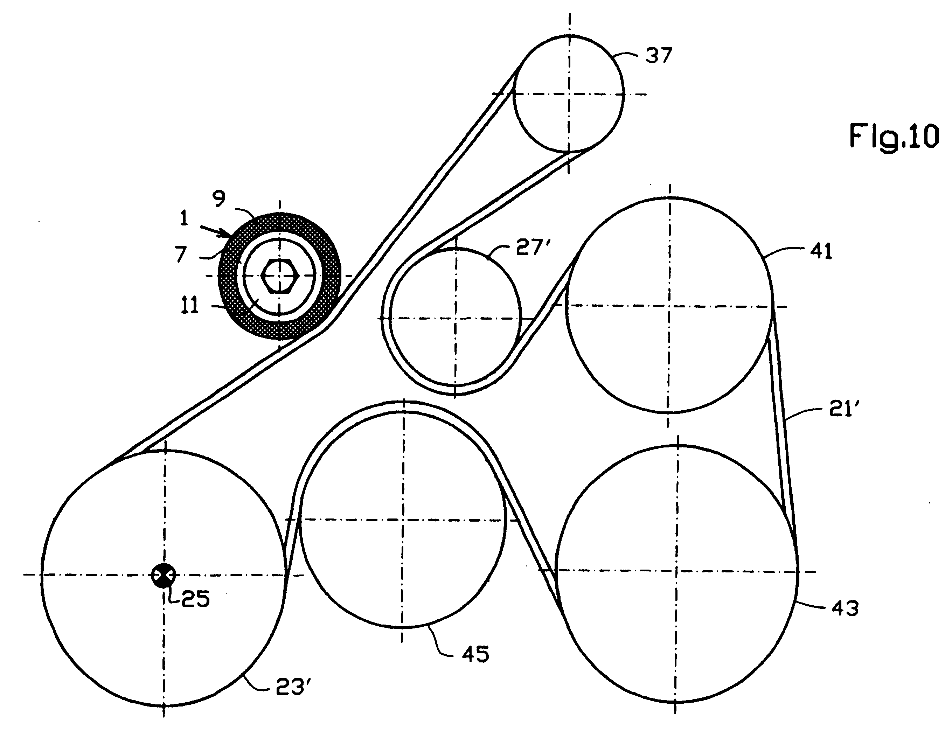

Sur la figure 10, on peut voir un exemple de dispositif mécanique à courroie 21' de transmission de puissance dite chaîne cinématique de transmission d'accessoire dans l'industrie automobile.

La courroie 21' passe par une poulie 23' solidarisée en rotation avec l'axe 25 d'un vilebrequin, d'un moteur thermique d'un véhicule automobile. La poulie 23' assure l'entraînement de l'ensemble de la chaîne cinématique de transmission d'accessoires de la figure 8.

La courroie passe sur une poulie 37 solidarisée en rotation avec l'axe de l'alternateur sur un galet 27' d'un tendeur de courroie fixe ou automatique, sur une poulie 41 solidarisée en rotation avec la pompe d'alimentation en fluide sous pression du circuit hydraulique de direction assistée, sur une poulie 43 solidarisée en rotation avec l'axe d'un compresseur de climatisation et sur une poulie 45 solidarisée en rotation avec l'axe de la pompe à eau du véhicule. Les poulies 23, 29, 31, 33, 23', 37, 41, 43 et 45 ainsi que les galets 1 tournent autour d'axes fixes par rapport au trajet des courroies 21, 21'. Au contraire, les axes de rotation des tendeurs 27 et 27' sont mobiles pour rattraper les variations statiques et/ou dynamiques de longueur des courroies 21 et 21'.

Il est bien entendu que le dispositif mécanique à courroie de transmission de puissance des figures 7 et 8 n'est donné qu'à titre d'exemple non limitatif et que la géométrie et le nombre des poulies et galets mis en oeuvre dépend des axes que l'on désire voir entraîner par la courroie.

La présente invention s'applique notamment à l'industrie mécanique.

La présente invention s'applique principalement à l'industrie automobile.

## Revendications

1. Dispositif mécanique de transmission de puissance comportant des pièces tournantes (23, 29, 31, 1, 33, 23', 37, 41, 43, 45) autour d'axes fixes entraînant (25) et/ou entraînées par une courroie (21, 21'), **caractérisé en ce qu'**au moins une desdites pièces tournantes autour d'axes fixes comporte, en contact avec la courroie (21, 21'), une bande de roulement (9) ou un revêtement radialement externe (9'), ladite bande de roulement ou ledit revêtement radialement externe étant en un matériau absorbant les vibrations et ayant une épaisseur comprise entre 0,5 et 10 mm.

2. Dispositif selon la revendication 1, **caractérisé en ce qu'**il comporte une poulie (23, 23') entraînant la courroie et solidarisée en rotation avec un arbre moteur (25), notamment l'axe d'un vilebrequin d'un moteur thermique de véhicules automobiles, au moins une poulie menée (29, 31, 37, 41, 43, 45) et un galet de renvoi (1).

3. Dispositif selon la revendication 1 ou 2, **caractérisé en ce qu'**il comporte un tendeur (27, 27) de courroie (21, 21').

4. Dispositif selon la revendication 2 ou 3, **caractérisé en ce que** le galet de renvoi (1) est muni d'une bande de roulement (9) ou d'un revêtement radialement externe (9') en matériau absorbant les vibrations.

5. Dispositif selon l'une quelconque des revendications précédentes, **caractérisé en ce que** le matériau absorbant les vibrations de la bande de roulement ou du revêtement radialement externe (9') est un élastomère.

6. Dispositif selon la revendication 5, **caractérisé en ce que** le matériau absorbant les vibrations de la bande de roulement (9) ou du revêtement radialement externe est réalisé en HNBR.

7. Dispositif selon l'une quelconque des revendications précédentes, **caractérisé en ce que** la bande de roulement (9) sur la courroie (21) ou le revêtement radialement externe (9') en matériau absorbant les vibrations a une épaisseur comprise entre 3 et 5 mm.

8. Dispositif selon l'une quelconque des revendications précédentes, **caractérisé en ce qu'**il comporte une chaîne cinématique de distribution entraînant des poulies (29, 31) liées en rotation aux arbres à cames d'un moteur thermique de véhicules automobiles.

9. Dispositif selon l'une quelconque des revendications 1 à 7, **caractérisé en ce que** ledit dispositif comporte une chaîne cinématique de transmission d'accessoire d'un moteur thermique de véhicules automobiles comportant une poulie (37) liée en rotation avec l'axe d'un alternateur.

10. Dispositif selon l'une quelconque des revendications précédentes, **caractérisé en ce que** la pièce tournante autour d'un axe fixe, comportant une bande de roulement (9) sur la courroie (21, 21') ou un revêtement radialement externe (9') en matériau absorbant les vibrations, comporte des flasques latérales (10) de guidage de la courroie (21, 21').

11. Moteur thermique pour véhicule automobile, **caractérisé en ce qu'**il comporte un dispositif mécanique de transmission de puissance selon l'une quelconque des revendications précédentes.

## Patentansprüche

1. Mechanische Vorrichtung für die Leistungsübertragung, welche drehende Teile (23, 29, 31, 1, 33, 23', 37, 41, 43, 45) aufweist, die um feststehende Achsen drehen, welche einen Riemen (21, 21') antreiben (25) und/oder von diesem angetrieben werden, **dadurch gekennzeichnet, daß** mindestens eines der um feststehende Achsen drehenden Teile eine mit dem Riemen 21, 21' in Berührung stehende Lauffläche oder in Radialrichtung äußere Beschichtung (9) aufweist, wobei die Lauffläche oder die in Radialrichtung äußere Beschichtung aus einem Vibrationen aufnehmenden Material besteht und eine Dicke von zwischen 0,5 und 10 mm besitzt.

2. Vorrichtung gemäß Anspruch 1, **dadurch gekennzeichnet, daß** sie eine Riemenscheibe (23, 23'), welche den Riemen antreibt und drehfest mit einer Antriebswelle (25), insbesondere der Achse einer Kurbelwelle einer Wärmekraftmaschine für Kraftfahrzeuge verbunden ist, mindestens eine getriebene Riemenscheibe (29, 31, 37, 41, 43, 45), und eine Vorgelegerolle (1) aufweist.

3. Vorrichtung gemäß Anspruch 1 oder 2, **dadurch gekennzeichnet, daß** sie eine Einrichtung (27, 27') zum Spannen eines Riemens (21, 21') aufweist.

4. Vorrichtung gemäß Anspruch 2 oder 3, **dadurch gekennzeichnet, daß** die Vorgelegerolle (1) mit einer Lauffläche (9) oder einer in Radialrichtung äußeren Beschichtung (9') aus einem Vibrationen aufnehmenden Material versehen ist.

5. Vorrichtung gemäß einem der vorhergehenden Ansprüche, **dadurch gekennzeichnet, daß** das Vibrationen aufnehmende Material der Lauffläche oder der in Radialrichtung äußeren Beschichtung (9') ein Elastomer ist.

6. Vorrichtung gemäß Anspruch 5, **dadurch gekennzeichnet, daß** das Vibrationen aufnehmende Material der Lauffläche (9) oder der in Radialrichtung äußeren Beschichtung aus HNBR gefertigt ist.

7. Vorrichtung gemäß einem der vorhergehenden Ansprüche, **dadurch gekennzeichnet, daß** die Lauffläche (9) für das Laufen auf dem Riemen (21) oder die in Radialrichtung äußere Beschichtung (9') aus einem Vibrationen aufnehmenden Material eine Dicke von zwischen 3 und 5 mm besitzt.

8. Vorrichtung gemäß einem der vorhergehenden Ansprüche, **dadurch gekennzeichnet, daß** sie eine kinematische Verteilerkette aufweist, welche Riemenscheiben (29, 31) antreibt, die drehfest mit den Nockenwellen einer Wärmekraftmaschine für Kraftfahrzeuge verbunden sind.

9. Vorrichtung gemäß einem der Ansprüche 1 bis 7, **dadurch gekennzeichnet, daß** die Vorrichtung eine kinematische Übertragungskette für ein Zusatzgerät einer Wärmekraftmaschine für ein Kraftfahrzeug aufweist, welche eine drehfest mit der Achse eines Drehstromgenerators verbundene Riemenscheibe (37) aufweist.

10. Vorrichtung gemäß einem der vorhergehenden Ansprüche, **dadurch gekennzeichnet, daß** das um eine feststehende Achse drehende Teil, welches eine Lauffläche (9) für das Laufen auf dem Riemen (21, 21') oder eine in Radialrichtung äußere Beschichtung (9) aus Vibrationen aufnehmendem Material aufweist, seitliche Flansche (10) zum Führen des Riemens (21, 21') aufweist.

11. Wärmekraftmaschine für ein Kraftfahrzeug, **dadurch gekennzeichnet, daß** sie eine mechanische Vorrichtung für die Leistungsübertragung gemäß einem der vorhergehenden Ansprüche aufweist.

## Claims

1. Mechanical power transmission device comprising parts (23, 29, 31, 1, 33, 23', 37, 41, 43, 45) rotating about fixed axes driving (25) and/or driven by a belt (21, 21'), **characterised in that** at least one of the said parts rotating about fixed axes comprises, in contact with the belt (21, 21'), a running tread (9) or a radially external covering (9'), the said running tread or the said radially external covering being made from a vibration-absorbing material and having a thickness of between 0.5 and 10 mm.

2. Device according to Claim 1, **characterised in that** it comprises a pulley (23, 23') driving the belt and rotationally fixed to a drive shaft (25), in particular the axis of the crankshaft of a motor vehicle thermal engine, at least one driven pulley (29, 31, 37, 41, 43, 45) and a return roller (1).

3. Device according to Claim 1 or 2, **characterised in that** it comprises a tensioner (27, 27') for a belt (21, 21').

4. Device according to Claim 2 or 3, **characterised in that** the return roller (1) is provided with a running tread (9) or a radially external cover (9') made from vibration-absorbing material.

5. Device according to any one of the preceding claims, **characterised in that** the vibration-absorbing material of the running tread or radially external covering (9') is an elastomer.

6. Device according to Claim 5, **characterised in that** the vibration-absorbing material of the running tread (9) or of the radially external cover is produced from HNBR.

7. Device according to any one of the preceding claims, **characterised in that** the running tread (9) on the belt (21) or the radially external cover (9') made from vibration-absorbing material has a thickness of between 3 and 5 mm.

8. Device according to any one of the preceding claims, **characterised in that** it comprises a kinematic distribution chain driving pulleys (29, 31) rotationally connected to the camshafts of a motor vehicle thermal engine.

9. Device according to any of Claims 1 to 7, **characterised in that** the device comprises an accessory kinematic transmission chain for a motor vehicle thermal engine comprising a pulley (37) rotationally connected to the spindle of an alternator.

10. Device according to any one of the preceding claims, **characterised in that** the part rotating about a fixed axis, comprising a running tread (9) on the belt (21, 21') or a radially external covering (9') made from vibration-absorbing material, comprises lateral flanges (10) for guiding the belt (21, 21').

11. Thermal engine for a motor vehicle, **characterised in that** it comprises a mechanical power transmission device according to any one of the preceding claims.
